# EUROPEAN PATENT SPECIFICATION

(11) **EP 2 816 450 B1**
(45) Date of publication and mention of the grant of the patent: **24.07.2019**
(21) Application number: 14172861.8
(22) Date of filing: 18.06.2014
(51) Int. Cl.: G06F 3/01, G06F 3/0346

(54) **Information processing apparatus, and information processing method**
Informationsverarbeitungsvorrichtung und Informationsverarbeitungsverfahren
Appareil et procédé de traitement d'informations

(30) Priority: 21.06.2013 JP 2013130850
(43) Date of publication of application: 24.12.2014
(73) Proprietor: CASIO COMPUTER CO., LTD., Shibuya-ku, Tokyo 151-8543 (JP)
(72) Inventor: Kasuga, Kazutaka, Hamura-shi, Tokyo 205-8555 (JP)
(74) Representative: Grünecker Patent- und Rechtsanwälte PartG mbB

(56) References cited:
- US-A1- 2005 212 750
- US-A1- 2009 278 793
- US-A1- 2012 259 578

## Description

This application is based upon and claims the benefit of priority from the prior Japanese Patent Application No. 2013-130850, filed June 21, 2013.

The present invention relates to an information processing apparatus and an information processing method.

In the past, there have been techniques involving the use of a wristwatch type apparatus worn on a user's arm as an input apparatus that recognizes the motion of an arm or the like, performed as an operation by the user, based on the detection result of an acceleration sensor or the like mounted in the apparatus and receiving the recognition result as an operation input (JP 2011-175315 A, JP 2002-358149 A, JP 2008-136697 A, and US 2005/0212750).

However, in the motion recognition techniques of the related art which are disclosed in, for example, JP 2011-175315 A, JP 2002-358149 A, and JP 2008-136697 A, the motion of an arm or the like performed by the user in daily life is likely to be erroneously recognized as a motion of an arm or the like performed as an operation by the user.

The present invention was made in light of the foregoing, and it is an object of the present invention to improve the accuracy of recognizing the motion of an arm or the like performed as an operation by the user.

This is achieved by the features of the independent claims.
FIG. 1 is a schematic diagram illustrating an external configuration of a wrist terminal as an information processing apparatus according to an embodiment of the present invention.
FIG. 2 is a block diagram illustrating a hardware configuration of the wrist terminal of FIG. 1.
FIG. 3 is a functional block diagram illustrating the functional components necessary for executing the motion recognition process among the functional components of the wrist terminal of FIG. 2.
FIG. 4 is a schematic diagram for describing the first pattern of the motion of a user's wrist and arm.
FIG. 5 is a schematic diagram for describing the second pattern of the motion of the user's wrist and arm.
FIG. 6 is a schematic diagram for describing the third pattern of the motion of the user's wrist and arm.
FIG. 7 is a schematic diagram for describing the fourth pattern of the motion of the user's wrist and arm.
FIGS. 8A and 8B are diagrams illustrating the difference in the threshold value used for motion recognition.
FIG. 9 is a timing chart illustrating the temporal transition of the threshold value set by the wrist terminal of FIG. 3.
FIG. 10 is a flowchart illustrating an example of the flow of the motion recognition process executed by the wrist terminal 11 of FIG. 2 having the functional configuration of FIG. 3.

Hereinafter, an embodiment of the present invention will be described with reference to the appended drawings.

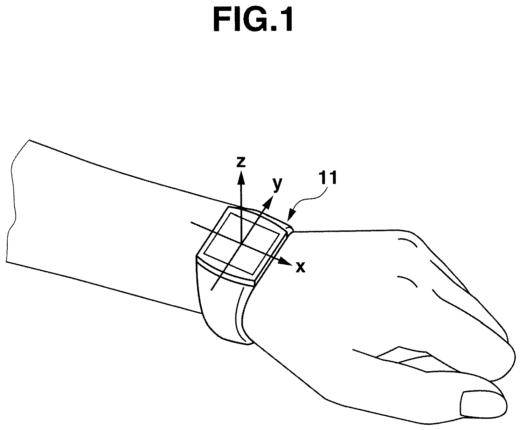

FIG. 1 is a schematic diagram illustrating an external configuration of a wrist terminal as an information processing apparatus according to an embodiment of the present invention.

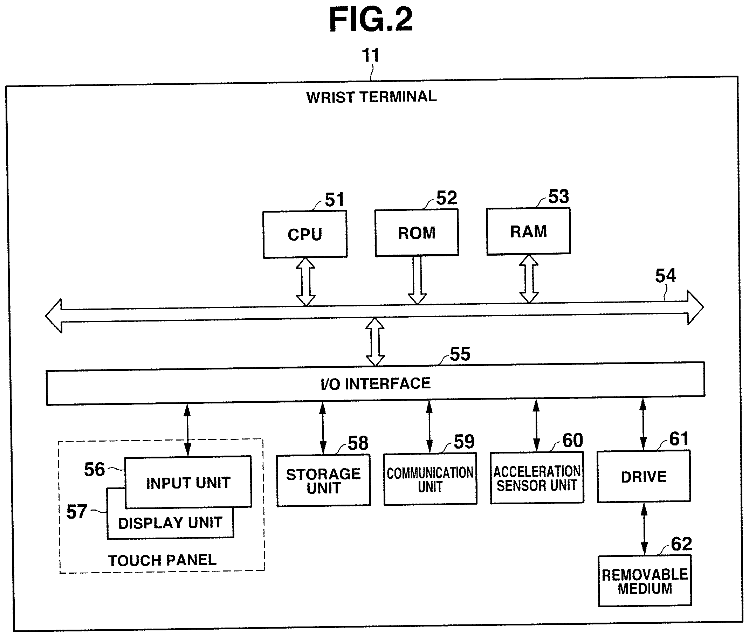

A wrist terminal 11 is a wrist type mobile terminal worn on the user's arm as illustrated in FIG. 1, and includes at least the function of recognizing the user's posture. In the present embodiment, the wrist terminal 11 includes an acceleration sensor (see FIG. 2 which will be described later) and is capable of detecting whether movement from the horizontal state has been performed based on a detection result of the acceleration sensor using the horizontal state as the reference for the user's posture.

In the present embodiment, when the user standing perpendicular to the ground maintains his/her arm horizontally as illustrated in FIG. 1, among horizontal directions, the direction from his/her elbow to his/her hand is referred to as the "x direction," the direction perpendicular to his/her arm (the direction from the thumb at the front to the little finger at the back when viewed from the user) is referred to as the "y direction," and the upward vertical direction is referred to as the "z direction."

FIG. 2 is a block diagram illustrating the hardware configuration of the wrist terminal 11 of FIG. 1.

The wrist terminal 11 includes a central processing unit (CPU) 51, a read only memory (ROM) 52, a random access memory (RAM) 53, a bus 54, an input/output (I/O) interface 55, an input unit 56, a display unit 57, a storage unit 58, a communication unit 59, an acceleration sensor unit 60, and a drive 61.

The CPU 51 executes various kinds of processing functions according to a program stored in the ROM 52 or a program loaded from the storage unit 58 to the RAM 53.

The RAM 53 appropriately stores, for example, data necessary when the CPU 51 executes various kinds of processing as well.

The CPU 51, the ROM 52, and the RAM 53 are connected to one another via the bus 54. The I/O interface 55 is also connected to the bus 54. The input unit 56, the display unit 57, the storage unit 58, the communication unit 59, the acceleration sensor unit 60 and the drive 61 are connected to the I/O interface 55.

The input unit 56 is formed by, for example, a capacitive or resistive position input sensor laminated on the display screen of the display unit 57, and detects the coordinates of the position at which a touch operation is performed. Here, the touch operation refers to an operation causing an object (the user's finger, a touch pen, or the like) to come into contact with or get closer to the input unit 56.

The display unit 57 is formed by a display device, and displays an image.

In other words, in the present embodiment, the touch panel is formed by the input unit 56 and the display unit 57.

The storage unit 58 is formed by a dynamic random access memory (DRAM) or the like, and stores various kinds of data.

The communication unit 59 performs wireless communication with a mobile terminal (not illustrated) or the like through Bluetooth (a registered trademark) or performs control such that communication with another terminal (not illustrated) is performed via a network such as the Internet through Wi-Fi.

The acceleration sensor unit 60 detects three axis acceleration components through a piezo-resistive or capacitive detection mechanism, and outputs the acceleration data of each of the three axial components indicating the detection result.

The way of implementing the three axial components to be detected by the acceleration sensor unit 60 is not consequential, but in the present embodiment, the three axial components (x, y, z) illustrated in FIG. 1 are employed.

A removable medium 62 is appropriately mounted onto the drive 61 if necessary. A program read from the removable medium 62 through the drive 61 is installed in the storage unit 58 if necessary. Furthermore, the removable medium 62 is capable of storing various kinds of data, such as data of an image stored in the storage unit 58, similarly to the storage unit 58.

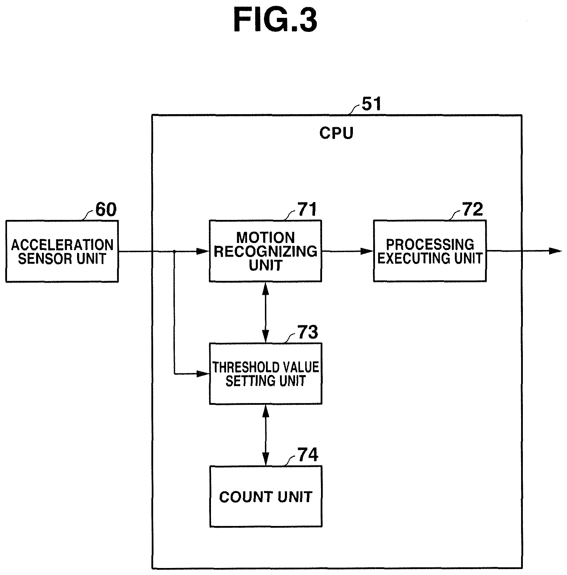

FIG. 3 is a functional block diagram illustrating the functional components necessary for executing a motion recognition process among the functional components of the wrist terminal 11.

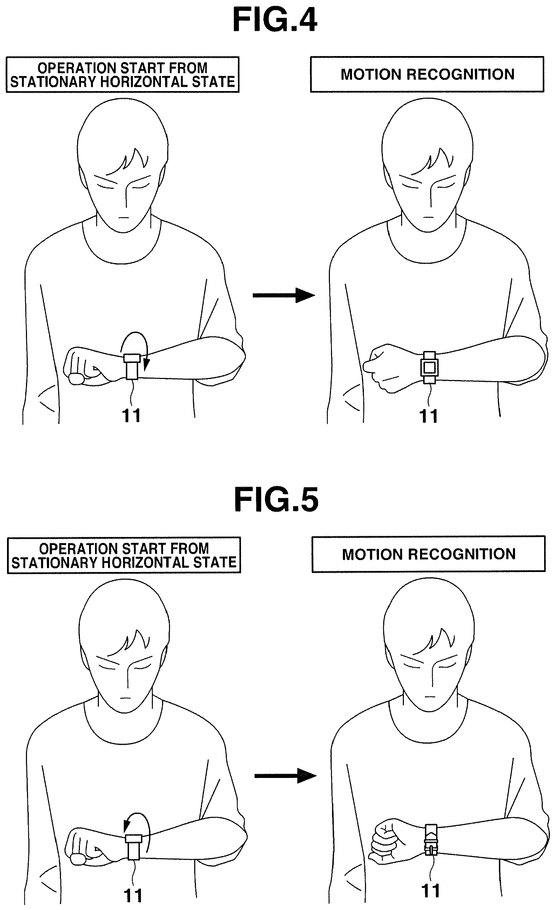

The motion recognition process refers to a series of processes for recognizing motions (motions of patterns illustrated in FIGS. 4 to 8 which will be described later in the present embodiment) of the wrist and the arm among motions which can be performed by the user based on the detection result of the acceleration sensor unit 60.

Each of the motions of the patterns illustrated in FIGS. 4 to 8, which will be described later, is associated with a predetermined input operation, and when a predetermined motion is recognized through the motion recognition process, an input operation associated with the pattern of the recognized predetermined motion is determined to have been performed, and processing corresponding to the input operation is performed at a subsequent stage. Here, the processing at the subsequent stage may be executed in the wrist terminal 11 or may be executed through another apparatus (not illustrated) capable of performing communication with the wrist terminal 11. In other words, in the present embodiment, the wrist terminal 11 functions as an input apparatus using the user's motion with respect to the wrist terminal 11 itself or another apparatus.

When the motion recognition process is executed, the CPU 51 of the wrist terminal 11 functions as a motion recognizing unit 71, a processing executing unit 72, a threshold value setting unit 73, and a count unit 74 as illustrated in FIG. 3.

The motion recognizing unit 71 recognizes the motions of the user's wrist and arm that are associated with the patterns illustrated in FIGS. 4 to 8 based on the detection result of the acceleration sensor unit 60.

FIGS. 4 to 7 are schematic diagrams for describing the patterns of the motions of the user's wrist and arm.

First, the user wearing the wrist terminal 11 on his/her wrist causes the wrist terminal 11 to be in a state in which the display unit 57 is stationary while facing upwards in the horizontal state. This state is referred to as the "stationary horizontal state." The stationary horizontal state is employed as a reference state in all patterns illustrated in FIGS. 4 to 8.

In the pattern illustrated in FIG. 4, the user starts an operation from the stationary horizontal state, and performs a motion inclining the display unit 57 of the wrist terminal 11 by rotating his/her wrist outwards when viewed from the user.

In the pattern illustrated in FIG. 5, the user starts an operation from the stationary horizontal state, and performs a motion inclining the display unit 57 of the wrist terminal 11 by rotating his/her wrist inwards when viewed from the user (rotating it in the direction opposite to the pattern of FIG. 4) .

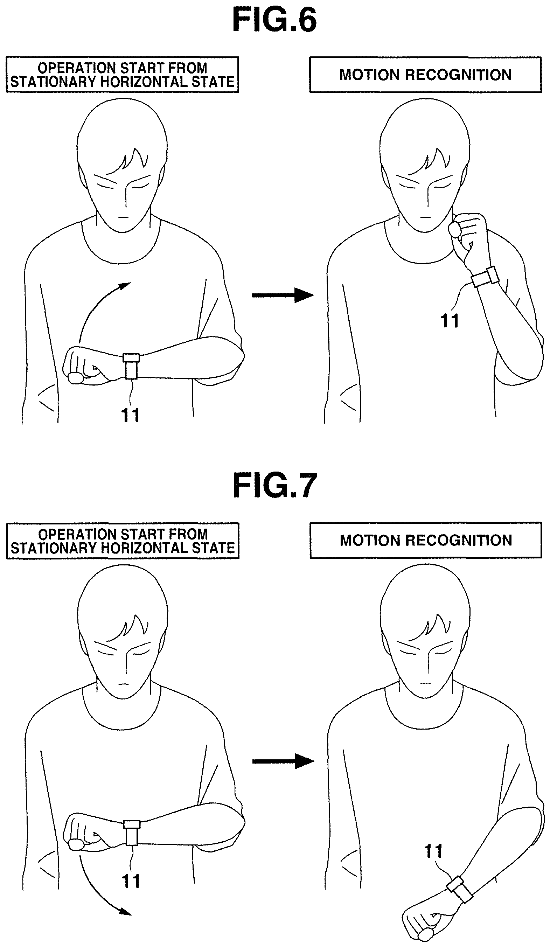

In the pattern illustrated in FIG. 6, the user starts an operation from the stationary horizontal state, and performs a motion inclining the display unit 57 of the wrist terminal 11 by moving his/her hand upwards on his/her elbow.

In the pattern illustrated in FIG. 7, the user starts an operation from the stationary horizontal state, and performs a motion inclining the display unit 57 of the wrist terminal 11 by moving his/her hand downwards (in the direction opposite to the pattern of FIG. 6) on his/her elbow.

The motion recognizing unit 71 first detects the stationary horizontal state as the reference state based on the detection result of the acceleration sensor unit 60, and recognizes the motion of a predetermined pattern among the patterns illustrated in FIGS. 4 to 8 when a specified time elapses after the detection of the reference state.

The processing executing unit 72 executes predetermined processing based on the content of an input operation associated with the pattern of a motion recognized by the motion recognizing unit 71.

Here, in a technique recognizing a motion through the motion recognizing unit 71, when the specified time is short, since the speed of response to the user's operation (a simple motion of moving his/her arm) is fast, it is desirable in terms of operability. However, there are many motions in daily life that are similar to the simple motion of moving the arm. Thus, the motion recognizing unit 71 is likely to erroneously detect a motion unless determining, using a certain method, whether a motion is the motion of the user operating the wrist terminal 11 or whether the motion is a motion performed in daily life,.

In this regard, when the stationary horizontal state is detected, the motion recognizing unit 71 recognizes that the user has taken a pose of starting a motion to operate the wrist terminal 11, and recognizes the motion of a predetermined pattern among the patterns illustrated in FIGS. 4 to 8 when the specified time elapses.

In the present embodiment, as a method of detecting the stationary horizontal state, a technique of detecting a state in which the posture (an angle to the horizontal direction) of the wrist terminal 11 which is determined based on the detection result of the acceleration sensor unit 60 is within a predetermined threshold value range as the horizontal state is employed.

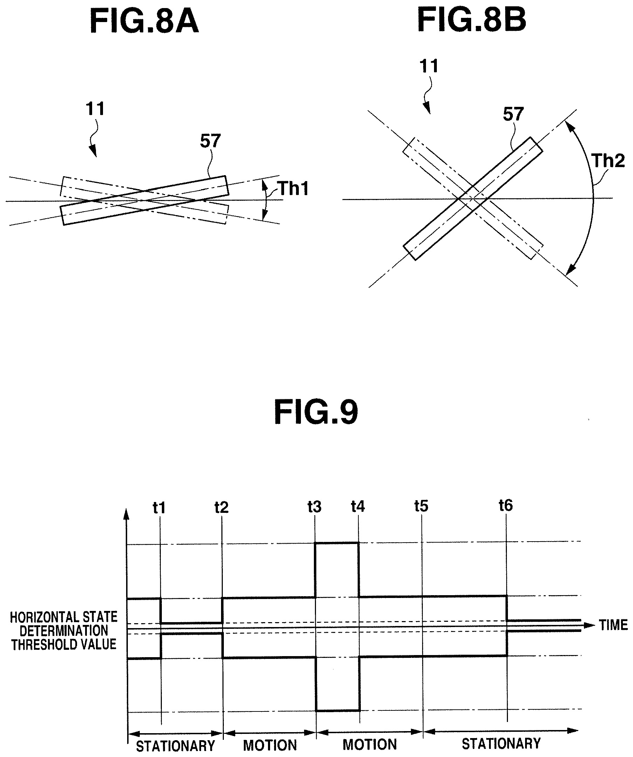

FIGS. 8A and 8B are diagrams illustrating the difference in threshold value used for motion recognition.

A threshold value Th1 illustrated in FIG. 8A is smaller in a threshold value Th2 illustrated in FIG. 8B, that is, a permissible angle to be horizontal, of the Th1 is smaller than that of the threshold value Th2.

In other words, in the case in which the threshold value is small such as the threshold value Th1 of FIG. 8A, when the display unit 57 of the wrist terminal 11 is even slightly inclined, the motion recognizing unit 71 does not recognize the horizontal state, that is, does not detect the stationary horizontal state.

As a result, for example, the user makes an attempt to perform a motion as an operation, but it is relatively difficult to cause the wrist terminal 11 to be stationary, and thus when the display unit 57 of the wrist terminal 11 is even slightly inclined, it is hard for the motion recognizing unit 71 to recognize a corresponding motion.

Meanwhile, when the user swings his/her arm loosely in daily life or moves his/her arm loosely during another operation, since the motion recognizing unit 71 does not detect the stationary horizontal state, it is possible to prevent erroneous motion recognition.

On the other hand, in the case in which the threshold value is large such as the threshold value Th2 of FIG. 8B, even when the display unit 57 of the wrist terminal 11 is slightly inclined, the motion recognizing unit 71 recognizes the horizontal state and thus detects the stationary horizontal state.

As a result, in case where the user makes an attempt to perform a motion as an operation even when it is relatively difficult to cause the wrist terminal 11 to be stationary, and thus the display unit 57 of the wrist terminal 11 is slightly inclined, the motion recognizing unit 71 can detect the stationary horizontal state. Thus, when the user greatly inclines the display unit 57 of the wrist terminal 11 in the next sequence, motion recognition can be performed with a high degree of accuracy.

Meanwhile, even when the user swings his/her arm loosely in daily life or moves his/her arm loosely during another operation, the motion recognizing unit 71 detects the stationary horizontal state. Thus, thereafter, when the user does not intend to perform an operation but has had the display unit 57 of the wrist terminal 11 inclined to a great extent, the motion recognizing unit 71 erroneously recognizes a motion.

As described above, both a large threshold value and a small threshold value have both an advantage and a disadvantage depending on conditions, and thus it is inappropriate to use a fixed threshold value. In other words, it is desirable to change the threshold value dynamically according to the time and the motion state of the wrist terminal 11.

In this regard, in the present embodiment, when the motion recognition process is executed, the CPU 51 functions as the threshold value setting unit 73 and the count unit 74 as illustrated in FIG. 3.

The threshold value setting unit 73 sets the threshold value according to the time and the motion state of the wrist terminal 11.

The count unit 74 performs a counting operation, and supplies the operation result (a count value) to the threshold value setting unit 73 as time information necessary to set the threshold value.

FIG. 9 is a timing chart illustrating the temporal transition of the threshold value, which is set by the threshold value setting unit 73.

The vertical axis indicates the threshold value used to determine the horizontal state, and the horizontal axis indicates the time axis. The time is assumed to be measured according to the count value of the count unit 74.

When a certain period of time elapses (time t1) after the wrist terminal 11 enters the stationary state, the threshold value setting unit 73 determines that the user is unlikely to perform a motion for an operation, and decreases the threshold value.

When the wrist terminal 11 starts a motion (a time t2), the threshold value setting unit 73 determines that the user is likely to perform a motion for an operation after that, and increases the threshold value.

Immediately after a motion is recognized (a time t3), the threshold value setting unit 73 considers that the wrist terminal 11 is performing a motion and the user is likely to perform a next motion in a state in which the wrist terminal 11 is not caused to be sufficiently horizontal, and thus increases the threshold value.

When a certain period of time has elapsed (a time t4) after a motion was recognized, the threshold value setting unit 73 determines that the user is likely to move his/her arm without intending to perform an operation since the user has finished an operation, and thus decreases the threshold value.

The threshold value may be increased or decreased by one step or multiple steps according to the elapsed time.

Next, a process executed by the wrist terminal 11 having the above-described functional configuration will be described.

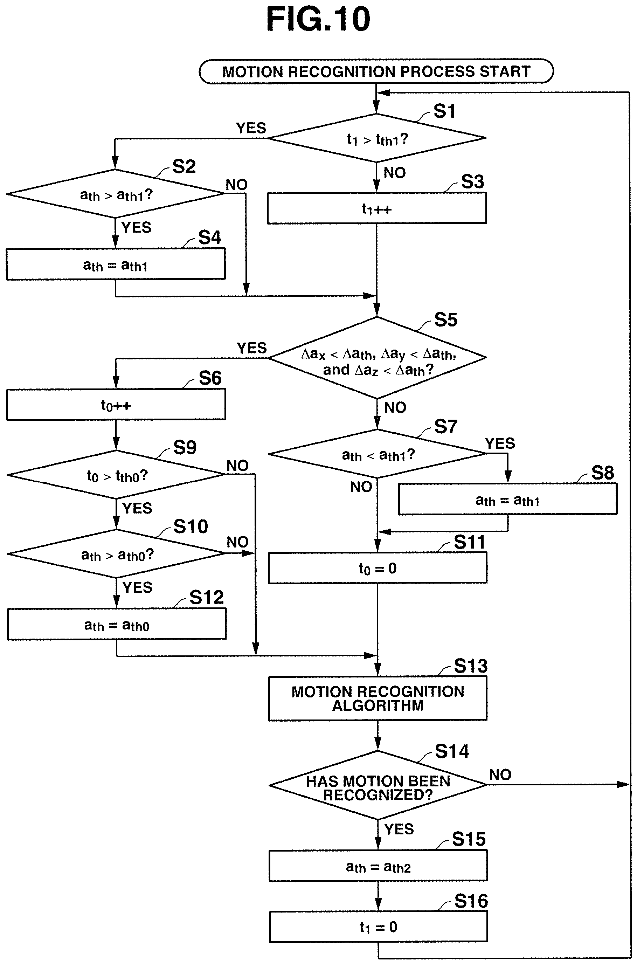

FIG. 10 is a flowchart illustrating an example of the flow of the motion recognition process executed by the wrist terminal 11 of FIG. 2 having the functional configuration of FIG. 3.

The determination to change the threshold value is performed according to the detection result (three axial acceleration values) of the acceleration sensor unit 60.

In the example of FIG. 10, a threshold value ath which is used to determine the horizontal state and set to an arbitrary time, three axial acceleration values ax, ay, and az, and three axial acceleration differential values Δax, Δay, and Δaz which are set at an arbitrary time are used. The threshold value ath0 < the threshold value ath1 < the threshold value ath2 are defined in advance as three types of value settable as the threshold value of the acceleration value.

Furthermore, a count value t0 which is counted only when the wrist terminal 11 is in the stationary state and a count value t1 which is counted regardless of whether the wrist terminal 11 is in the horizontal state are used as count value (a period of time) used by the count unit 74.

Furthermore, as a timing (a threshold value) of the count value (period of time) at which the threshold value ath is changed by the threshold value setting unit 73, a timing tth0 at which the threshold value ath is changed as the stationary state is detected is defined to be larger than a timing tth1 at which the threshold value ath is changed after motion detection is defined in advance.

Furthermore, since the threshold value for motion state determination is also used, in order to distinguish it from the threshold value used to determine the horizontal state, it is hereinafter referred to as a "motion state determination threshold value." Similarly, the threshold value used to determine the horizontal state is referred to as a "horizontal state determination threshold value" to be distinguished from the motion state determination threshold value.

The acceleration differential value Δath is defined as the motion state determination threshold value.

When the wrist terminal 11 described above is powered on and a predetermined condition is satisfied, the motion recognition process starts, and the following process starting from step S1 is executed.

In step S1, the count unit 74 determines whether the count value t1 has exceeded the timing tth1.

When the count value t1 is determined not to have exceeded the timing tth1, that is, when the predetermined time tth1 has not elapsed from the point in time (see step S16 which will be described later) at which the previous motion was recognized (in the example of FIG. 9, when a motion has been recognized after the time t3 but thereafter the time t4 has not elapsed), the determination result in step S1 is NO, and the process proceeds to step S3 without changing the horizontal state determination threshold value ath.

In step S3, the count unit 74 increases the count value t1 by 1 (t1++). Thereafter, the process proceeds to step S5, but the process from step S5 will be described later.

However, when the count value t1 is determined to have exceeded the timing tth1, that is, when the predetermined time tth1 has elapsed from a point in time (see step S16 which will be described later) at which the previous motion was recognized (in the example of FIG. 9, the time t4), the determination result in step S1 is YES, and the process proceeds to step S2.

In step S2, the threshold value setting unit 73 determines whether the currently set horizontal state determination threshold value ath is larger than the threshold value ath1.

When the currently set horizontal state determination threshold value ath is determined to be the threshold value ath1 or less, the determination result in step S2 is NO, and the process proceeds to step S5 without changing the horizontal state determination threshold value ath. The process from step S5 will be described later.

However, when the currently set horizontal state determination threshold value ath is determined to be larger than the threshold value ath1, that is, the currently set horizontal state determination threshold value ath is the threshold value ath2, the determination result in step S2 is YES, and the process proceeds to step S4.

In step S4, the threshold value setting unit 73 changes the setting of the horizontal state determination threshold value ath to be decreased to the threshold value ath1 (ath = ath1: see a change at the time t4 in the example of FIG. 9). Then, the process proceeds to step S5.

In step S5, the threshold value setting unit 73 determines whether all the three axial acceleration differential values Δax, Δay, and Δaz are smaller than the motion state determination threshold value Δath (whether Δax < Δath, Δay < Δath, and Δaz < Δath). In other words, in step S5, it is determined whether the wrist terminal 11 is in the stationary state.

When all the three axial acceleration differential values Δax, Δay, and Δaz are smaller than the motion state determination threshold value Δath (for example, in the example of FIG. 9, when the time t5 has elapsed or when the time t2 has not elapsed), the wrist terminal 11 is determined to be in the stationary state, the determination result in step S5 is YES, and the process proceeds to step S6.

In step S3, the count unit 74 increases the count value t0 by 1 (t0++).

In step S9, the count unit 74 determines whether the count value t0 has exceeded the timing tth0.

When the count value t0 is determined not to have exceeded the timing tth0, that is, when the duration of the stationary state is determined not to have exceeded the specified time tth0 (in the example of FIG. 9, between the time t5 and the time t6 or before the time t1), the determination result in step S9 is NO, the process proceeds to step S13 without changing the horizontal state determination threshold value ath. The process from step S13 will be described later.

However, when the count value t0 is determined to have exceeded the timing tth0, that is, the stationary state is continued until the specified time tth0 (in the example of FIG. 9, the time t6 or the time t1), the determination result in step S9 is YES, and the process proceeds to step S10.

In step S10, the threshold value setting unit 73 determines whether the currently set horizontal state determination threshold value ath is larger than the threshold value ath0.

When the currently set horizontal state determination threshold value ath is the smallest threshold value ath0, the determination result in step S10 is NO, and the process proceeds to step S13 without changing the horizontal state determination threshold value ath. The process from step S13 will be described later.

On the other hand, when the currently set horizontal state determination threshold value ath is determined to be larger than the threshold value ath0, that is, when the currently set horizontal state determination threshold value ath is the threshold value ath1 or the threshold value ath2, the determination result in step S10 is YES, and the process proceeds to step S12.

In step S12, the threshold value setting unit 73 changes the setting of the horizontal state determination threshold value ath to be decreased to the threshold value ath0 (ath = ath0: see the change at the time t6 or the time t1 in the example of FIG. 9). Then, the process proceeds to step S13. The process from step S13 will be described later.

A series of processes when the wrist terminal 11 is determined to be in the stationary state, that is, YES is determined in step S5, have been described so far.

Next, a series of processes when the wrist terminal 11 is determined to be in the motion state, that is, when at least one of the three axial acceleration differential values Δax, Δay, and Δaz is larger than the motion state determination threshold value Δath (for example, in the example of FIG. 9, between the time t2 and the time t5), will be described. In this case, the determination result in step S5 is NO, the process proceeds to step S7, and the following series of processes is executed.

In step S7, the threshold value setting unit 73 determines whether the currently set horizontal state determination threshold value ath is smaller than the threshold value ath1. When the currently set horizontal state determination threshold value ath is the threshold value ath1 (or the threshold value ath2), the determination result in step S7 is NO, the process proceeds to step S11 without changing the horizontal state determination threshold value ath. The process from step S11 will be described later.

On the other hand, when the currently set horizontal state determination threshold value ath is the threshold value ath0, the determination result in step S7 is YES, and the process proceeds to step S8.

In step S8 the threshold value setting unit 73 changes the setting of the horizontal state determination threshold value ath to be decreased to the threshold value ath1 (ath = ath1: see a change at the time t2 in the example of FIG. 9). Then, the process proceeds to step S11.

In step S11, the count unit 74 resets the count value t0 to 0 (t0 = 0).

The count value t0 reset to 0 as described above is not increased as long as the wrist terminal 11 is in the motion state, and thus the horizontal state determination threshold value ath does not become the threshold value ath0.

In step S13, the motion recognizing unit 71 makes an attempt to recognize a motion according to a motion recognition algorithm.

In this case, when the angle to the horizontal direction of the wrist terminal 11 falls within the horizontal state determination threshold value ath which is appropriately changed in the process of steps S1 to S12, the motion recognizing unit 71 determines that the wrist terminal 11 is in the stationary horizontal state. Specifically, since the angle to the horizontal direction of the wrist terminal 11 can be identified based on the acceleration value ax of the x axis and the acceleration value ay of the y axis among the detection results of the acceleration sensor unit 60, the motion recognizing unit 71 determines that the wrist terminal 11 is in the stationary horizontal state when the acceleration value ax of the x axis and the acceleration value ay of the y axis fall within the range of the horizontal state determination threshold value ath.

Then, after the motion recognizing unit 71 is determined to be in the stationary horizontal state, it recognizes which pattern of motion, among the patterns illustrated in FIGS. 3 to 7, is performed based on the moving locus of the wrist terminal 11. Since a motion is recognized based on the stationary horizontal state as described above, in case where the acceleration value ax of the x axis and the acceleration value ay of the y axis do not fall within the range of the horizontal state determination threshold value ath, the stationary horizontal state is not detected, and thus, no motion is recognized.

In step S14, the threshold value setting unit 73 determines whether a motion has been recognized.

When no motion is determined to have been recognized, the determination result in step S14 is NO, the process returns to step S1 without changing the horizontal state determination threshold value ath, and the process from step S1 is repeatedly executed.

However, when a motion is determined to have been recognized, the determination result in step S14 is YES, and the process proceeds to step S15.

In step S15, the threshold value setting unit 73 changes the setting of the horizontal state determination threshold value ath to be increased to the threshold value ath2 (ath = ath2: see a change at the time t3 in the example of FIG. 9).

In step S16, the count unit 74 resets the count value t1 to 0 (t1 = 0).

Thereafter, the process returns to step S1, and the process from step S1 is repeated.

As described above, the wrist terminal 11, as the information processing apparatus according to the embodiment of the present invention, includes the motion recognizing unit 71, the count unit 74, the acceleration sensor unit 60, and the threshold value setting unit 73.

When the angle to the horizontal direction of the wrist terminal 11 worn on the user's arm is within the range of the threshold value (the horizontal state determination threshold value ath), the motion recognizing unit 71 detects that the wrist terminal 11 is in the reference state in which the horizontal posture is taken, and recognizes an apparatus motion of the wrist terminal 11 from the reference state.

The count unit 74 performs a counting operation to measure the time.

The acceleration sensor unit 60 detects the acceleration values of the three axes as the motion state of the wrist terminal 11.

The threshold value setting unit 73 sets the threshold value (the horizontal state determination threshold value ath) according to the time measured by the count unit 74 and the motion state of the wrist terminal 11 detected by the acceleration sensor unit 60.

As a result, the accuracy of recognizing the motion of an arm or the like performed as an operation by the user can be improved.

In other words, since the threshold value is dynamically changed, it is possible to prevent erroneous motion recognition when the user is unlikely to perform an operation while maintaining the motion recognition accuracy to be more than a certain level when the user is likely to perform an operation.

The count unit 74 starts time measuring when the stationary state of the wrist terminal 11 is detected by the acceleration sensor unit 60.

The threshold value setting unit 73 can decrease the threshold value when a certain time is measured by the count unit 74 (for example, the time t1 of FIG. 9).

As described above, as the threshold value is decreased when the user is unlikely to perform a motion for an operation, it is possible to prevent erroneous motion recognition when the user is unlikely to perform an operation.

The threshold value setting unit 73 is capable of increasing the threshold value when the acceleration sensor unit 60 detects that the wrist terminal 11 has started a motion (for example, the time t2 of FIG. 9).

As described above, since the user is likely to perform a motion after the wrist terminal 11 starts a motion, by increasing the threshold value, it is possible to maintain the motion recognition accuracy to be more than a certain level when the user is likely to perform an operation.

The threshold value setting unit 73 can increase the threshold value when the motion recognizing unit 71 recognizes a motion (a motion of the wrist terminal 11).

As described above, immediately after a motion is recognized (for example, the time t3 of FIG. 9), the wrist terminal 11 is in motion, and the user is likely to perform a motion in a state in which the wrist terminal 11 is not sufficiently horizontal. Thus, by increasing the threshold value, it is possible to maintain the motion recognition accuracy to be more than a certain level when the user is likely to perform an operation.

The count unit 74 starts time measuring when the motion recognizing unit 71 recognizes a motion (a motion of the wrist terminal 11).

The threshold value setting unit 73 can decrease the threshold value when the count unit 74 measures a certain time.

As described above, when a certain period of time has elapsed (for example, the time t4 of FIG. 9) since a motion was recognized, the user is likely to move his/her arm other than for an operation since the user has finished an operation, and thus by decreasing the threshold value, it is possible to prevent erroneous motion recognition when the user is not likely to perform an operation.

As described above, a detecting unit that detects the motion state of the wrist terminal 11 is an acceleration sensor in the present embodiment, and the threshold value is represented by the acceleration value.

As described above, the threshold value of the acceleration value by which the wrist terminal 11 is recognized to be in the horizontal state is dynamically changed according to the time and acceleration state. As a result, it is possible to prevent erroneous motion recognition when the user is unlikely to perform an operation while maintaining the motion recognition accuracy when the user is likely to perform an operation.

As described above, the information processing apparatus according to an embodiment of the present invention is the wrist terminal 11. In other words, the wrist terminal 11 is provided with the motion recognizing unit 71, the count unit 74, the acceleration sensor unit 60, and the threshold value setting unit 73.

As a result, the user can operate the wrist terminal 11 by a simple motion by simply wearing the wrist terminal 11 on his/her arm without any special apparatus being provided. At this time, although the arm moves in a motion from daily life, erroneous recognition of a motion as an operation is reduced.

The present invention is not limited to the above embodiment, and changes or improvement of the above embodiment or the like is included in the present invention as long as the object of the present invention is achieved.

In the above embodiment, the process according to the flowchart of FIG. 10 is employed as the motion recognition process, but FIG. 10 is merely an example in which three types of horizontal state determination threshold value, two types of counter serving as an index of the timing at which the threshold value is changed, and a single type of motion state determination threshold value are used. In other words, in the motion recognition process, it is enough if two or more kinds of arbitrary value are used as the horizontal state determination threshold value, and if two or more kinds of counters are used.

In the above embodiment, the acceleration sensor unit 60 is employed, but the present invention is not particularly limited to this example, and any sensor apparatus may be employed as long as it has the function of detecting the motion state of the wrist terminal 11.

Furthermore, in the above embodiment, the wrist terminal 11 has the function of setting the threshold value, but the present invention is not particularly limited to this example, and the function of setting the threshold value may be installed in another apparatus (not illustrated). Similarly, any other function, such as the function of recognizing a motion, need not be necessarily installed in the wrist terminal 11 and may be installed in another apparatus (not illustrated) (in this case, the number of apparatuses need not be necessarily one and may be two or more).

In other words, the above embodiment has been described using the wrist terminal as the information processing apparatus to which the present invention is applied, but the present invention is not particularly limited to this example.

For example, the present invention can be applied to an apparatus worn on the user's arm or a general electronic apparatus having the function of performing communication with the corresponding apparatus. Specifically, for example, the present invention may be applied to a laptop personal computer, a printer, a television receiver, a video camera, a portable navigation apparatus, a mobile telephone, a portable game machine, or the like.

The above described series of processes may be implemented by hardware or software.

In other words, the functional configuration of FIG. 3 is merely an example, and the present invention is not particularly limited to this example. In other words, as long as the wrist terminal 11 is provided with a function capable of executing the above-described series of processes as a whole, a functional block used to implement this function is not particularly limited to the example of FIG. 23.

Furthermore, a single functional block may be formed by single hardware, single software, or a composition thereof.

When a series of processes is executed by software, a program forming the software is installed in a computer or the like from a network or a recording medium.

The computer may be a computer incorporated into dedicated hardware. Furthermore, the computer may be a computer capable of executing various kinds of function by installing various kinds of program therein such as a general-purpose personal computer.

The recording medium including the program may be formed not only by the removable medium 62 of FIG. 2, which is distributed separately from the apparatus body in order to provide the user with the program, but may be formed by a recording medium provided to the user in a state in which it is incorporated into the apparatus body in advance. For example, the removable medium 62 is formed by a magnetic disk (including a floppy disk), an optical disk, or a magneto optical disk, or the like. For example, the optical disk is formed by a compact disk-read only memory (CD-ROM), a digital versatile disk (DVD), or the like. The magneto optical disk is formed by a mini-disk (MD) or the like. Furthermore, the recording medium provided to the user in a state in which it is incorporated into the apparatus body is formed by, for example, the ROM 52 of FIG. 2 storing the program or a hard disk included in the storage unit 58 of FIG. 2.

Furthermore, in this specification, steps describing a program recorded in a recording medium include not only processes which are chronologically performed according to an order but also processes which are not necessarily chronologically performed but executed in parallel or individually.

Furthermore, in this specification, the term "system" refers to an overall apparatus formed by a plurality of apparatuses, a plurality of units, or the like.

The embodiments of the present invention have been described above, but the above embodiments are merely examples and do not intend to limit the technical scope of the present invention. The present invention may be implemented in various kinds of embodiment, and various changes such as omission and replacement may be made within the scope not departing from the claims of the present invention. The embodiments and modifications thereof are included in the scope of the invention described in this specification.

## Claims

1. An information processing apparatus, comprising:
a detecting unit (60); a motion recognition unit (71) adapted to determine that an apparatus worn on a user is in a reference state, based on a detection result of the detecting unit (60), when an angle of a display unit of the apparatus with respect to a predetermined direction is within a range of a threshold value;
when the apparatus is determined to be in the reference state, the motion recognizing unit (71) is adapted to recognize, based on a detection result of the detecting unit (60), a motion of the apparatus from the reference state;
an input unit (72) adapted to receive an input operation corresponding to the motion of the apparatus from the reference state recognized by the recognizing unit; and
wherein the detecting unit (60) is adapted to detect whether the apparatus is in a stationary state or a motion state which is different from the stationary state;
the information processing apparatus **characterized by** further comprising a time measuring unit (74) adapted to measure time; and
a setting unit (73) adapted to set the threshold value according to the time measured by the time measuring unit (74) and the stationary or the motion state of the apparatus detected by the detecting unit (60); wherein
the setting unit (73) is adapted to decrease the threshold value when the apparatus is in the stationary state for a certain time.

2. The information processing apparatus according to claim 1,
wherein the setting unit (73) is adapted to increase the threshold value when the detecting unit (60) detects that the apparatus enters the motion state.

3. The information processing apparatus according to claim 1 or 2,
wherein the setting unit (73) is adapted to increase the threshold value when the recognizing unit recognizes a motion of the apparatus from the reference state.

4. The information processing apparatus according to any of claims 1 to 3,
wherein the time measuring unit (74) is further adapted to measure the time elapsed since a motion of the apparatus from the reference state is recognized, and
the setting unit (73) is adapted to decrease the threshold value when a certain time is measured by the time measuring unit (74).

5. The information processing apparatus according to any of claims 1 to 4,
wherein the detecting unit (60) is an acceleration sensor;
the angle of the display unit of the apparatus with respect to a predetermined direction is identified based on the acceleration value.

6. An apparatus wearable by a user including the information processing apparatus according to any of claims 1 to 5.

7. An information processing method performed by an information processing apparatus, comprising:
a determining step (S13) of determining that an apparatus worn on a user is in a reference state, based on a detection result of a detecting unit (60), when an angle of a display unit of the apparatus with respect to a predetermined direction is within a range of a threshold value;
a recognizing step (S14) of recognizing a motion of the apparatus from the reference state, based on a detection result of the detecting unit (60), when the apparatus is determined to be in the reference state in the determining step;
an input step of receiving an input operation corresponding to the motion of the apparatus from the reference state recognized in the recognizing step; and
a detecting step (S5) of detecting whether the apparatus is in a stationary state or a motion state which is different from the stationary state;
the method **characterized by** further comprising
a time measuring step (S3, S6, S11, S16) of measuring time; and
a setting step (S1, S2, S4, S5 - S12) of setting the threshold value according to the time measured by the time measuring step (S3, S6, S11, S16) and the stationary or the motion state of the apparatus detected in the detecting step (S5); wherein
the setting step (S6. S9. S10. S12) decreases the threshold value when the apparatus is in the stationary state for a certain time.

## Patentansprüche

1. Informationsverarbeitungsvorrichtung, umfassend:
eine Erfassungseinheit (60),
eine Bewegungserkennungseinheit (71), die ausgebildet ist zum Bestimmen, dass sich eine an einem Benutzer getragene Vorrichtung in einem Referenzzustand befindet, basierend auf einem Erfassungsergebnis der Erfassungseinheit (60), wenn der Winkel einer Anzeigeeinheit der Vorrichtung in Bezug auf eine vorbestimmte Richtung innerhalb eines Bereichs eines Schwellwerts liegt,
wobei, wenn bestimmt wird, dass sich die Vorrichtung in dem Referenzzustand befindet, die Bewegungserkennungseinheit (71) ausgebildet ist zum Erkennen, basierend auf einem Erfassungsergebnis der Erfassungseinheit (60), einer Bewegung der Vorrichtung aus dem Referenzzustand,
eine Eingabeeinheit (72), die ausgebildet ist zum Empfangen einer Eingabeoperation in Entsprechung zu der durch die Erkennungseinheit erkannten Bewegung der Vorrichtung aus dem Referenzzustand,
wobei die Erfassungseinheit (60) ausgebildet ist zum Erfassen, ob sich die Vorrichtung in einem stationären Zustand oder einem Bewegungszustand, der verschieden von dem stationären Zustand ist, befindet,
wobei die Informationsverarbeitungsvorrichtung weiterhin **gekennzeichnet ist durch:**
eine Zeitmesseinheit (74), die ausgebildet ist zum Messen der Zeit, und
eine Setzeinheit (73), die ausgebildet ist zum Setzen des Schwellwerts in Entsprechung zu der **durch** die Zeitmesseinheit (74) gemessenen Zeit und dem **durch** die Erfassungseinheit (60) erfassten stationären Zustand oder Bewegungszustand der Vorrichtung,
wobei die Setzeinheit (73) ausgebildet ist zum Vermindern des Schwellwerts, wenn sich die Vorrichtung für eine bestimmte Zeitdauer in dem stationären Zustand befindet.

2. Informationsverarbeitungsvorrichtung nach Anspruch 1, wobei die Setzeinheit (73) ausgebildet ist zum Erhöhen des Schwellwerts, wenn die Erfassungseinheit (60) erfasst, dass die Vorrichtung in den Bewegungszustand eintritt.

3. Informationsverarbeitungsvorrichtung nach Anspruch 1 oder 2, wobei die Setzeinheit (73) ausgebildet ist zum Erhöhen des Schwellwerts, wenn die Erkennungseinheit eine Bewegung der Vorrichtung aus dem Referenzzustand erkennt.

4. Informationsverarbeitungsvorrichtung nach einem der Ansprüche 1 bis 3, wobei:
die Zeitmesseinheit (74) weiterhin ausgebildet ist zum Messen der seit dem Erkennen einer Bewegung aus dem Referenzzustand abgelaufenen Zeit, und
die Setzeinheit (73) ausgebildet ist zum Vermindern des Schwellwerts, wenn eine bestimmte Zeit durch die Zeitmesseinheit (74) gemessen wird.

5. Informationsverarbeitungsvorrichtung nach einem der Ansprüche 1 bis 4, wobei:
die Erfassungseinheit (60) ein Beschleunigungssensor ist, und
der Winkel der Anzeigeeinheit der Vorrichtung in Bezug auf eine vorbestimmte Richtung basierend auf dem Beschleunigungswert identifiziert wird.

6. Vorrichtung, die durch einen Benutzer getragen werden kann und die Informationsverarbeitungsvorrichtung gemäß den Ansprüchen 1 bis 5 enthält

7. Informationsverarbeitungsverfahren, das durch eine Informationsverarbeitungsvorrichtung durchgeführt wird, umfassend:
einen Bestimmungsschritt (S13) zum Bestimmen, dass sich eine an einem Benutzer getragene Vorrichtung in einem Referenzzustand befindet, basierend auf einem Erfassungsergebnis einer Erfassungseinheit (60), wenn der Winkel einer Anzeigeeinheit der Vorrichtung in Bezug auf eine vorbestimmte Richtung innerhalb eines Bereichs eines Schwellwerts liegt,
einen Erkennungsschritt (S14) zum Erkennen einer Bewegung der Vorrichtung aus dem Referenzzustand, basierend auf einem Erfassungsergebnis der Erfassungseinheit (60), wenn in dem Bestimmungsschritt bestimmt wird, dass sich die Vorrichtung in dem Referenzzustand befindet,
einen Eingabeschritt zum Empfangen einer Eingabebetätigung in Entsprechung zu der in dem Erkennungsschritt erkannten Bewegung der Vorrichtung aus dem Referenzzustand, und
einen Erfassungsschritt (S5) zum Erfassen, ob sich die Vorrichtung in einem stationären Zustand oder einem Bewegungszustand, der verschieden von dem stationären Zustand ist, befindet,
wobei das Verfahren weiterhin **gekennzeichnet ist durch:**
einen Zeitmessschritt (S3, S6, S11, S16) zum Messen der Zeit, und
einen Setzschritt (S1, S2, S4, S5-S12) zum Setzen des Schwellwerts in Entsprechung zu der in dem Zeitmessschritt (S3, S6, S11, S16) gemessenen Zeit und dem in dem Erfassungsschritt (S5) erfassten stationären Zustand oder Bewegungszustand,
wobei der Setzschritt (S6, S9, S10, S12) den Schwellwert vermindert, wenn sich die Vorrichtung für eine bestimmte Zeit in dem stationären Zustand befindet.

## Revendications

1. Appareil de traitement d'informations comportant :
un unité de détection (60) ;
une unité de reconnaissance de mouvements (71) adaptée pour déterminer, en se fondant sur un résultat de détection de l'unité de détection (60), qu'un appareil porté par un utilisateur se trouve dans un état de référence quand un angle d'une unité d'affichage de l'appareil par rapport à une direction prédéterminée est compris dans une plage d'une valeur seuil ;
lorsqu'il est déterminé que l'appareil se trouve dans l'état de référence, l'unité de reconnaissance de mouvement (71) est adaptée pour reconnaître, en se fondant sur un résultat de détection de l'unité de détection (60), un mouvement de l'appareil à partir de l'état de référence ;
une unité de saisie (72) adaptée pour recevoir une opération de saisie correspondant au mouvement de l'appareil à partir de l'état de référence reconnu par l'unité de reconnaissance ; et
où l'unité de détection (60) est adaptée pour détecter si l'appareil se trouve dans un état stationnaire ou un état de mouvement différent de l'état stationnaire ;
l'appareil de traitement d'information étant **caractérisé en ce qu'**il comporte en outre une unité de mesure du temps (74) adaptée pour mesurer le temps ; et
une unité de réglage (73) adaptée pour régler la valeur seuil en fonction du temps mesuré par l'unité de mesure du temps (74) et de l'état stationnaire ou de mouvement de l'appareil détecté par l'unité de détection (60) ; où
l'unité de réglage (73) est adaptée pour réduire la valeur seuil quand l'appareil est à l'état stationnaire pendant un certain temps.

2. Appareil de traitement d'informations selon la revendication 1,
où l'unité de réglage (73) est adaptée pour augmenter la valeur seuil quand l'unité de détection (60) détecte que l'appareil entre dans un état de mouvement.

3. Appareil de traitement d'informations selon la revendication 1 ou 2,
où l'unité de réglage (73) est adaptée pour augmenter la valeur seuil quand l'unité de reconnaissance reconnaît un mouvement de l'appareil à partir de l'état de référence.

4. Appareil de traitement d'informations selon l'une quelconque des revendications 1 à 3,
où l'unité de mesure du temps (74) est en outre adaptée pour mesurer le temps écoulé depuis la reconnaissance d'un mouvement de l'appareil à partir de l'état de référence, et
l'unité de réglage (73) est adaptée pour réduire la valeur seuil quand un certain temps est mesuré par l'unité de mesure du temps (74).

5. Appareil de traitement d'informations selon l'une quelconque des revendications 1 à 4,
où l'unité de détection (60) est un capteur d'accélération ;
l'angle de l'unité d'affichage de l'appareil par rapport à une direction prédéterminée est identifié en se fondant sur la valeur de l'accélération.

6. Appareil portable par un utilisateur comprenant l'appareil de traitement d'informations selon l'une quelconque des revendications 1 à 5.

7. Procédé de traitement d'informations mis en oeuvre par un appareil de traitement d'informations, comportant :
une étape de détermination (S13) consistant à déterminer, en se fondant sur un résultat de détection d'une unité de détection (60), qu'un appareil porté par un utilisateur se trouve dans un état de référence quand un angle d'une unité d'affichage de l'appareil par rapport à une direction prédéterminée est compris dans une plage d'une valeur seuil ;
une étape de reconnaissance (S14) consistant à reconnaître, en se fondant sur un résultat de détection de l'unité de détection (60), un mouvement de l'appareil à partir de l'état de référence, lorsqu'il est déterminé que l'appareil se trouve dans l'état de référence lors de l'étape de détermination ;
une étape de saisie consistant à recevoir une opération de saisie correspondant au mouvement de l'appareil à partir de l'état de référence reconnu lors de l'étape de reconnaissance ; et
une étape de détection (S5) consistant à détecter si l'appareil se trouve dans un état stationnaire ou un état de mouvement différent de l'état stationnaire ;
le procédé étant **caractérisé en ce qu'**il comporte en outre
une étape de mesure de temps (S3, S6, S11, S16) consistant à mesurer le temps ; et
une étape de réglage (S1, S2, S4, S5-S12) consistant à régler la valeur seuil en fonction du temps mesuré lors de l'étape de mesure du temps (S3, S6, S11, S16) et de l'état stationnaire ou de mouvement de l'appareil détecté lors de l'étape de détection (S5) ; où
l'étape de réglage (S6, S9, S10, S12) réduit la valeur seuil lorsque l'appareil se trouve à l'état stationnaire pendant un certain temps.
